# EUROPEAN PATENT APPLICATION

(11) **EP 4 601 095 A1**
(43) Date of publication of application: **13.08.2025**
(21) Application number: 22961746.9
(22) Date of filing: 13.10.2022
(51) Int. Cl.: H01M 50/30

(54) **BATTERY CELL, BATTERY AND ELECTRIC DEVICE**

(71) Applicant: Contemporary Amperex Technology (Hong Kong) Limited, Central (HK)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN)
(74) Representative: Gong, Jinping
(86) International application number: PCT/CN2022/125174
(87) International publication number: WO 2024/077557

(57) **Abstract**

This application provides a battery cell, a battery, an electric device, and relates to the field of batteries. The battery cell includes an electrode assembly and a housing. The electrode assembly includes a first electrode plate, a second electrode plate, and a separator, where the first electrode plate and the second electrode plate have opposite polarities, the first electrode plate includes a plurality of first electrode plate portions, the second electrode plate includes a plurality of second electrode plate portions, along a first direction, the first electrode plate portions and the second electrode plate portions are stacked, and the separator is configured to insulate and separate the first electrode plate portion from the second electrode plate portion. The housing is configured to accommodate the electrode assembly, the housing having a pressure relief mechanism. At least one of the first electrode plate portions is provided with a first notch facing the pressure relief mechanism at a position corresponding to the pressure relief mechanism, and along the first direction, the separator covers the first notch. The first notch is provided on the first electrode plate portion of the battery cell. The first notch corresponds to the position of the pressure relief mechanism and faces the pressure relief mechanism to avoid the pressure relief mechanism, reducing the risk of the first electrode plate portion blocking the pressure relief mechanism and enhancing the safety of the battery cell.

## Description

### TECHNICAL FIELD

This application relates to the field of batteries, and specifically, to a battery cell, a battery, and an electric device.

### BACKGROUND

Batteries are widely used in the new energy field, such as in electric vehicles and new energy vehicles. New energy vehicles and electric vehicles have already become the new trend in the automotive industry. The development of battery technology needs to consider various design factors simultaneously, such as battery lifespan, energy density, discharge capacity, charge-discharge rate, and other performance parameters. Additionally, the safety of the battery must also be considered. However, the safety of current batteries is relatively poor.

### SUMMARY

Embodiments of this application aim to provide a battery cell, a battery, and an electric device, which are intended to eliminate the problem of poor battery safety in the related art.

According to a first aspect, an embodiment of this application provides a battery cell, where the battery cell includes an electrode assembly and a housing. The electrode assembly includes a first electrode plate, a second electrode plate, and a separator, where the first electrode plate and the second electrode plate have opposite polarities, the first electrode plate includes a plurality of first electrode plate portions, the second electrode plate includes a plurality of second electrode plate portions, along a first direction, the first electrode plate portions and the second electrode plate portions are stacked, and the separator is configured to insulate and separate the first electrode plate portion from the second electrode plate portion. The housing is configured to accommodate the electrode assembly, the housing having a pressure relief mechanism. At least one of the first electrode plate portions is provided with a first notch facing the pressure relief mechanism at a position corresponding to the pressure relief mechanism, and along the first direction, the separator covers the first notch.

In the above technical solution, the electrode assembly includes the first electrode plate, the second electrode plate, and the separator. The first electrode plate, the second electrode plate, and the separator can be wound or stacked to form the electrode assembly. The first electrode plate includes a plurality of first electrode plate portions, and the second electrode plate includes a plurality of second electrode plate portions. The plurality of first electrode plate portions and the plurality of second electrode plate portions are stacked in the first direction. The separator is provided between the first electrode plate portion and the second electrode plate portion to insulate and separate the first electrode plate portion from the second electrode plate portion, preventing the first electrode plate portion and the second electrode plate portion from contacting and causing a short circuit. The first notch is provided on the first electrode plate portion of the battery cell. The first notch corresponds to the position of the pressure relief mechanism and faces the pressure relief mechanism, allowing the first notch to avoid the pressure relief mechanism, and reducing the risk of the first electrode plate portion blocking the pressure relief mechanism. This allows the pressure relief mechanism to open normally during pressure relief of the battery cell, enhancing the safety of the battery cell. It should be noted that since the separator is relatively soft and therefore is not prone to block the pressure relief mechanism, there is no need to provide an avoidance structure on the separator, simplifying production.

As an optional technical solution of the embodiments of this application, a plurality of first electrode plate portions each are provided with the first notch, and in a plane perpendicular to a second direction, a projection of the pressure relief mechanism overlaps with projections of the plurality of first notches at least partially; where the second direction is perpendicular to the first direction, and the first notches face the pressure relief mechanism along the second direction.

In the above technical solution, with the first notches provided on the plurality of first electrode plate portions, the plurality of first electrode plate portions can avoid the pressure relief mechanism, reducing the risk of the electrode assembly blocking the pressure relief mechanism and enhancing the safety of the battery cell.

As an optional technical solution of the embodiments of this application, in a plane perpendicular to the second direction, the projections of the plurality of first notches are all located within the projection of the pressure relief mechanism.

In the above technical solution, among the plurality of first notches, the first notches located within the projection of the pressure relief mechanism on the electrode assembly can avoid the pressure relief mechanism. However, among the plurality of first notches, the first notches located outside the projection of the pressure relief mechanism on the electrode assembly cannot avoid the pressure relief mechanism. Therefore, all the first notches are located within the projection of the pressure relief mechanism on the electrode assembly, so that the first electrode plate portions provided with the first notches all avoid the pressure relief mechanism, reducing the risk of the electrode assembly blocking the pressure relief mechanism, and improving the safety of the battery cell. At the same time, since the positions where the first notches are provided cannot undergo electrochemical reactions, all the first notches are provided as within the projection of the pressure relief mechanism on the electrode assembly, while the first electrode plate portions outside the projection of the pressure relief mechanism on the electrode assembly are not provided with the first notches, which is conducive to improving the avoidance effect on the pressure relief mechanism while ensuring a higher energy density of the battery cell.

As an optional technical solution of the embodiments of this application, the plurality of first notches are arranged side by side along the first direction.

In the above technical solution, the plurality of first notches being arranged side by side along the first direction is more conducive to avoiding the pressure relief mechanism (when the plurality of first notches are not arranged side by side along the first direction, part of the first electrode plate portions may block the pressure relief mechanism, resulting in a reduced avoidance effect).

As an optional technical solution of the embodiments of this application, in a plane perpendicular to the first direction, a projection area of the first notch is S1, and a projection area of the first electrode plate portion is S2, satisfying: S1/(S1+S2)≤0.1.

In the above technical solution, since the positions where the first notches are provided cannot undergo electrochemical reactions, limiting S1/(S1+S2)≤0.1 ensures that the first notch is not too large, thereby ensuring that the energy density of the battery cell is not excessively compromised due to the provision of the first notch.

As an optional technical solution of the embodiments of this application, S1/(S1+S2)≤0.03 is further satisfied.

In the above technical solution, limiting S1/(S1+S2)≤0.03 ensures that the first notch is not too large, achieving the avoidance of the pressure relief mechanism while ensuring a high energy density of the battery cell.

As an optional technical solution of the embodiments of this application, at least one of the second electrode plate portions is provided with a second notch facing the pressure relief mechanism at a position corresponding to the pressure relief mechanism, and along the first direction, the separator covers the second notch.

In the above technical solution, the first notch is provided on the first electrode plate portion of the battery cell. The first notch corresponds to the position of the pressure relief mechanism and faces the pressure relief mechanism. The second notch is provided on the second electrode plate portion. The second notch corresponds to the position of the pressure relief mechanism and faces the pressure relief mechanism. The first notch and the second notch are both configured to avoid the pressure relief mechanism, reducing the risk of the first electrode plate portion and the second electrode plate portion blocking the pressure relief mechanism. This allows the pressure relief mechanism to open normally during pressure relief of the battery cell, enhancing the safety of the battery cell.

As an optional technical solution of the embodiments of this application, a plurality of second electrode plate portions each are provided with the second notch, and in a plane perpendicular to the second direction, the projection of the pressure relief mechanism overlaps with projections of the plurality of second notches at least partially; where the second direction is perpendicular to the first direction, and the first notches face the pressure relief mechanism along the second direction.

In the above technical solution, with the second notches provided on the plurality of second electrode plate portions, the plurality of second electrode plate portions can avoid the pressure relief mechanism, reducing the risk of the electrode assembly blocking the pressure relief mechanism and enhancing the safety of the battery cell.

As an optional technical solution of the embodiments of this application, in a plane perpendicular to the second direction, the projections of the plurality of second notches are all located within the projection of the pressure relief mechanism.

In the above technical solution, among the plurality of second notches, the second notches located within the projection of the pressure relief mechanism on the electrode assembly can effectively avoid the pressure relief mechanism. However, among the plurality of second notches, the second notches located outside the projection of the pressure relief mechanism on the electrode assembly cannot avoid the pressure relief mechanism. Therefore, all the second notches are located within the projection of the pressure relief mechanism on the electrode assembly, so that the second electrode plate portions provided with the second notches all avoid the pressure relief mechanism, reducing the risk of the electrode assembly blocking the pressure relief mechanism, and improving the safety of the battery cell. In addition, since the positions where the second notches are provided cannot undergo electrochemical reactions, all the second notches are provided as within the projection of the pressure relief mechanism on the electrode assembly, while the second electrode plate portions outside the projection of the pressure relief mechanism on the electrode assembly are not provided with the second notches, which is conducive to improving the avoidance effect on the pressure relief mechanism while ensuring a higher energy density of the battery cell.

As an optional technical solution of the embodiments of this application, the plurality of second notches are arranged side by side along the first direction.

In the above technical solution, the plurality of second notches being arranged side by side along the first direction is more conducive to avoiding the pressure relief mechanism (when the plurality of second notches are not arranged side by side along the first direction, a first electrode plate portion or a second electrode plate portion may block the pressure relief mechanism, resulting in a reduced avoidance effect).

As an optional technical solution of the embodiments of this application, in a plane perpendicular to the second direction, a total area of overlapping parts between the projections of the plurality of first notches and the projection of the pressure relief mechanism is S3, a total area of overlapping parts between the projections of the plurality of second notches and the projection of the pressure relief mechanism is S4, and the projection area of the pressure relief mechanism is S5, satisfying: (S3+S4)/S5≥0.3.

In the above technical solution, with (S3+S4)/S5≥0.3, a sum of a total area of part of the projections of the plurality of first notches on the pressure relief mechanism that are within the pressure relief mechanism and a total area of part of the projections of the plurality of second notches on the pressure relief mechanism that are within the pressure relief mechanism accounts for more than 30% of the projection area of the pressure relief mechanism, achieving a good avoidance effect of the pressure relief mechanism.

As an optional technical solution of the embodiments of this application, in a plane perpendicular to the first direction, a projection area of the second notch is S6, and a projection area of the second electrode plate portion is S7, satisfying: S6/(S6+S7)≤0.1.

In the above technical solution, since the positions where the second notches are provided cannot undergo electrochemical reactions, limiting S6/(S6+S7)≤0.1 ensures that the second notch is not too large, thereby ensuring that the energy density of the battery cell is not excessively compromised due to the provision of the second notch.

As an optional technical solution of the embodiments of this application, S6/(S6+S7)≤0.03 is further satisfied.

In the above technical solution, limiting S6/(S6+S7)≤0.03 ensures that the second notch is not too large, achieving the avoidance of the pressure relief mechanism while ensuring a higher energy density of the battery cell.

As an optional technical solution of the embodiments of this application, along the second direction, a depth dimension of the first notch is H1, a depth dimension of the second notch is H2, the second direction is perpendicular to the first direction, and the first notch and the second notch both face the pressure relief mechanism along the second direction; where at least one of H1 and H2 has a dimension not less than 2mm.

In the above technical solution, the depth of the first notch is greater than or equal to 2mm, so that the first notch has sufficient depth to avoid the pressure relief mechanism. The depth of the second notch is greater than or equal to 2mm, so that the second notch has sufficient depth to avoid the pressure relief mechanism.

As an optional technical solution of the embodiments of this application, that at least one of H1 and H2 has a dimension not less than 3mm is further satisfied.

In the above technical solution, the depth of the first notch is greater than or equal to 3mm, so that the effect of the first notch avoiding the pressure relief mechanism is better. The depth of the second notch is greater than or equal to 3mm, so that the effect of the second notch avoiding the pressure relief mechanism is better.

As an optional technical solution of the embodiments of this application, the housing has a first wall, a second wall, and a third wall, along a third direction, the first wall is opposite the third wall, the second wall connects the first wall and the third wall, the first wall and/or the third wall is provided with an electrode terminal, the electrode terminal is electrically connected to the electrode assembly, and the third direction is perpendicular to the first direction; and the pressure relief mechanism is provided on the second wall.

In the above technical solution, the electrode terminals and the pressure relief mechanism being provided on different walls reduces the influence of the pressure relief mechanism on the electrode terminals, improving the safety of the battery cell.

As an optional technical solution of the embodiments of this application, the electrode terminal is provided on the first wall, and along the third direction, a distance between the pressure relief mechanism and the first wall is greater than a distance between the pressure relief mechanism and the third wall.

In the above technical solution, along the third direction, the distance between the pressure relief mechanism and the first wall is greater than the distance between the pressure relief mechanism and the third wall, that is, the pressure relief mechanism is provided in a region of the second wall farther from the electrode terminals, to further reduce the influence of the pressure relief mechanism on the electrode terminal, improving the safety of the battery cell.

As an optional technical solution of the embodiments of this application, the housing is provided with a plurality of pressure relief mechanisms, one first electrode plate portion is provided with a plurality of first notches, and the first notches are in one-to-one correspondence with the pressure relief mechanisms.

In the above technical solution, the provision of the plurality of pressure relief mechanisms facilitates pressure relief of the battery cell from multiple positions simultaneously, accelerating the pressure relief speed, and thereby improving the safety of the battery cell. In this case, one first electrode plate portion is provided with a plurality of first notches to avoid the plurality of pressure relief mechanisms, reducing the risk of the first electrode plate portion blocking a pressure relief mechanism. This allows each pressure relief mechanism to open normally during pressure relief of the battery cell, improving the safety of the battery cell.

As an optional technical solution of the embodiments of this application, the first electrode plate is a positive electrode plate.

In the above technical solution, providing the first notch only on the positive electrode plate will not cause lithium precipitation. If the first electrode plate is a negative electrode plate, lithium precipitation will occur, reducing the performance of the battery cell.

As an optional technical solution of the embodiments of this application, the electrode assembly is a stacked electrode assembly.

In the above technical solution, during manufacturing, the first electrode plate can be provided with the first notch first, and then winding or stacking is performed to form the electrode assembly. Compared with a wound electrode assembly, a stacked electrode assembly is easier to ensure that the position of the first notch corresponds to the pressure relief mechanism.

According to a second aspect, an embodiment of this application further provides a battery, where the battery includes a box and the above battery cell, where the battery cell is accommodated in the box.

According to a third aspect, an embodiment of this application further provides an electric device, where the electric device includes the above battery cell, where the battery cell is configured to supply electrical energy; or the electric device includes the above battery, where the battery is configured to supply electrical energy.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic top view of a battery cell according to some embodiments of this application;
FIG. 5 is a cross-sectional view along A-A in FIG. 4;
FIG. 6 is a cross-sectional view along B-B in FIG. 5;
FIG. 7 is a cross-sectional view along C-C in FIG. 5 (the first notches are located inside the projection of the pressure relief mechanism on the electrode assembly);
FIG. 8 is a bottom schematic view of FIG. 5 (the first notches are located inside the projection of the pressure relief mechanism on the electrode assembly);
FIG. 9 is a cross-sectional view along C-C in FIG. 5 (part of the first notches are located outside the projection of the pressure relief mechanism on the electrode assembly);
FIG. 10 is a bottom schematic view of FIG. 5 (part of the first notches are located outside the projection of the pressure relief mechanism on the electrode assembly);
FIG. 11 is a cross-sectional view along C-C in FIG. 5 (part of the first notches and second notches are located outside the projection of the pressure relief mechanism on the electrode assembly);
FIG. 12 is a bottom schematic view of FIG. 5 (part of the first notches and second notches are located outside the projection of the pressure relief mechanism on the electrode assembly);
FIG. 13 is a cross-sectional view along A-A in FIG. 4 (a distance between the pressure relief mechanism and the first wall is greater than a distance between the pressure relief mechanism and the third wall);
FIG. 14 is a cross-sectional view along A-A in FIG. 4 (the electrode terminals are provided on the first wall, and the pressure relief mechanism is provided on the third wall);
FIG. 15 is a cross-sectional view along A-A in FIG. 4 (the electrode terminals are provided on the first wall and the third wall); and
FIG. 16 is a cross-sectional view along A-A in FIG. 4 (including a plurality of pressure relief mechanisms).

Reference signs: 10 - box; 11 - first portion; 12 - second portion; 20 - battery cell; 21 - housing; 211 - housing body; 212 - end cover; 213 - pressure relief mechanism; 214 - electrode terminal; 215 - first wall; 216 - second wall; 217 - third wall; 22 - electrode assembly; 221 - first electrode plate portion; 222 - second electrode plate portion; 223 - separator; 224 - body portion; 225 - tab; 226 - first notch; 227 - second notch; 100 - battery; 200 - controller; 300 - motor; and 1000 - vehicle.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery unit.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a high current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a stacked structure. However, the embodiments of this application are not limited thereto.

Currently, from the perspective of market development, application of batteries is becoming more extensive. Batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of batteries, market demands for batteries are also increasing.

The development of battery technology needs to consider various design factors simultaneously, such as battery lifespan, energy density, discharge capacity, charge-discharge rate, and other performance parameters. Additionally, the safety of the battery must also be considered. However, the safety of current batteries is relatively poor.

For a battery cell, to ensure the safety of the battery cell, a pressure relief mechanism may be provided on the battery cell. When the internal pressure of the battery cell reaches the burst pressure, the pressure relief mechanism opens to release the internal pressure of the battery cell, thereby reducing the risk of explosion and fire of the battery cell.

The inventor has noticed that in the prior art, the distance between the electrode assembly of the battery cell and the pressure relief mechanism is relatively close. During use, the electrode assembly is prone to blocking the pressure relief mechanism, resulting in the pressure relief mechanism being unable to relieve pressure, increasing the risk of explosion and fire of the battery cell, and the safety of the battery cell is relatively poor.

In view of this, an embodiment of this application provides a battery cell, where the battery cell includes an electrode assembly and a housing. The electrode assembly includes a first electrode plate, a second electrode plate, and a separator, where the first electrode plate and the second electrode plate have opposite polarities, the first electrode plate includes a plurality of first electrode plate portions, the second electrode plate includes a plurality of second electrode plate portions, along a first direction, the first electrode plate portions and the second electrode plate portions are stacked, and the separator is configured to insulate and separate the first electrode plate portion from the second electrode plate portion. The housing is configured to accommodate the electrode assembly, the housing having a pressure relief mechanism. At least one of the first electrode plate portions is provided with a first notch facing the pressure relief mechanism at a position corresponding to the pressure relief mechanism, and along the first direction, the separator covers the first notch.

The electrode assembly includes the first electrode plate, the second electrode plate, and the separator. The first electrode plate, the second electrode plate, and the separator can be wound or stacked to form the electrode assembly. The first electrode plate includes a plurality of first electrode plate portions, and the second electrode plate includes a plurality of second electrode plate portions. The plurality of first electrode plate portions and the plurality of second electrode plate portions are stacked in the first direction. The separator is provided between the first electrode plate portion and the second electrode plate portion to insulate and separate the first electrode plate portion from the second electrode plate portion, preventing the first electrode plate portion and the second electrode plate portion from contacting and causing a short circuit. The first notch is provided on the first electrode plate portion of the battery cell. The first notch corresponds to the position of the pressure relief mechanism and faces the pressure relief mechanism, allowing the first notch to avoid the pressure relief mechanism, and reducing the risk of the first electrode plate portion blocking the pressure relief mechanism. This allows the pressure relief mechanism to open normally during pressure relief of the battery cell, enhancing the safety of the battery cell. It should be noted that since the separator is relatively soft and therefore is not prone to block the pressure relief mechanism, there is no need to provide an avoidance structure on the separator, simplifying production.

Additionally, with the first notch provided on the first electrode plate portion, the energy density of the battery cell can be relatively high.

The technical solution described in the embodiments of this application is applicable to batteries and electric devices using batteries.

The electric device may be a vehicle, a mobile phone, a portable device, a notebook computer, a ship, a spacecraft, an electric toy, an electric tool, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, an example in which the electric device is a vehicle 1000 is used for description in the following embodiments.

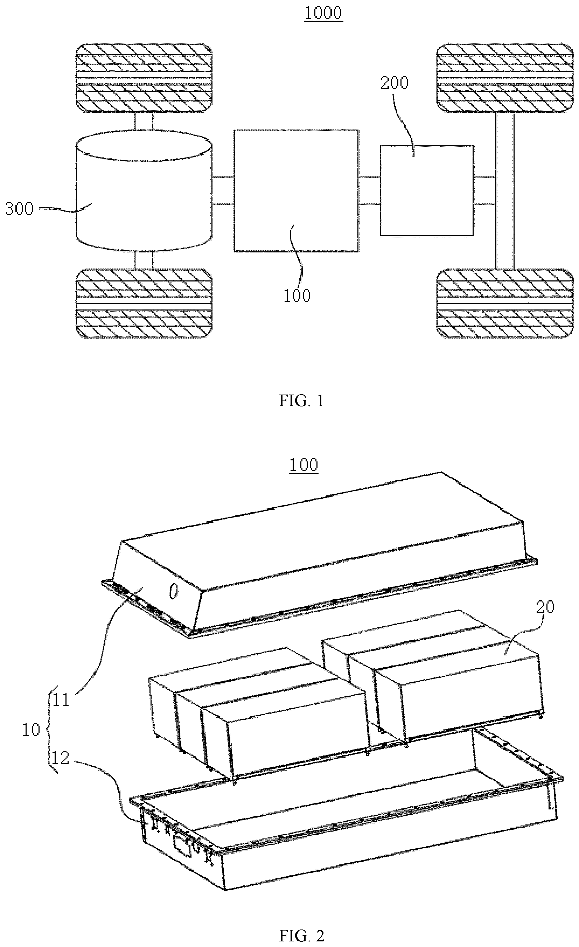

Referring to FIG. 1, FIG. 1 is a schematic structural diagram of the vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply electric energy to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further includes a busbar configured to implement electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, without being limited thereto. The battery cell 20 may be cylindrical, flat, cuboid, or of other shapes.

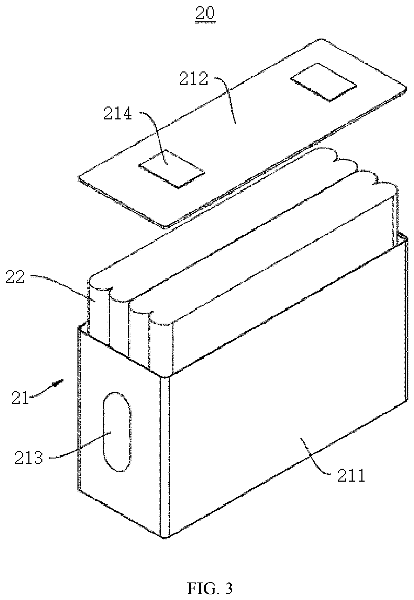

Referring to FIG. 3, FIG. 3 is an exploded view of a battery cell 20 according to some embodiments of this application. The battery cell 20 is a smallest element constituting the battery 100. As shown in FIG. 3, the battery cell 20 includes a housing 21 and an electrode assembly 22.

The housing 21 includes a housing body 211 and an end cover 212, where the end cover 212 refers to a component that covers the opening of the housing body 211 to isolate the internal environment of the battery cell 20 from the external environment. Without limitation, a shape of the end cover 212 may be adapted to a shape of the housing body 211 such that the end cover 212 fits with the housing body 211. Optionally, the end cover 212 may be made of a material with certain hardness and strength (for example, aluminum alloy), so that the end cover 212 is less likely to deform when subjected to extrusion and collision, allowing the battery cell 20 to have higher structural strength and improved safety performance. The end cover 212 may also be made of various materials, such as copper, iron, aluminum, stainless steel, aluminum alloy, and plastic. This is not particularly limited in the embodiments of this application. The end cover 212 may be provided with functional components such as an electrode terminal 214. The electrode terminal 214 may be configured to be electrically connected to the electrode assembly 22 for outputting or inputting electric energy of the battery cell 20. In some embodiments, an insulating member (not shown in the figure) may be provided on the inner side of the end cover 212, where the insulating member can be configured to isolate the electrical connection components inside the housing body 211 from the end cover 212, reducing the risk of a short circuit. For example, the insulating member may be made of plastic, rubber, or the like.

The housing body 211 is an assembly configured to cooperate with the end cover 212 to form an internal environment of the battery cell 20, where the formed internal environment can be used to accommodate the electrode assembly 22, an electrolyte, and other components. The housing body 211 and the end cover 212 may be separate components, an opening may be provided in the housing body 211, and the end cover 212 covers the opening to form the internal environment of the battery cell 20. The end cover 212 and the housing body 211 are not limited and may also be integrated. Specifically, the end cover 212 and the housing body 211 may form a shared connection surface before other components are disposed in the housing, and then the housing body 211 is covered with the end cover 212 when inside of the housing body 211 needs to be enclosed. The housing body 211 may be in various shapes and sizes, such as a cuboid shape, a cylindrical shape, and a hexagonal prism shape. Specifically, a shape of the housing body 211 may be determined according to a specific shape and size of the electrode assembly 22. The housing body 211 may be made of various materials, such as copper, iron, aluminum, stainless steel, aluminum alloy, and plastic, which are not particularly limited in the embodiments of this application.

The electrode assembly 22 is a component in which electrochemical reactions take place in the battery cell 20. The housing 21 may include one or more electrode assemblies 22. The electrode assembly 22 is mainly formed by winding or stacking a positive electrode plate and a negative electrode plate, and a separator 223 is typically disposed between the positive electrode plate and the negative electrode plate. Parts of the positive electrode plate and the negative electrode plate that have active substances constitute a body portion 224 of the electrode assembly 22, while parts of the positive electrode plate and the negative electrode plate that have no active substances constitute tabs 225 respectively. A positive electrode tab and a negative electrode tab may both be located at one end of the body portion 224 or be located at two ends of the body portion 224 respectively. During charge and discharge of the battery 100, a positive electrode active substance and a negative electrode active substance react with an electrolyte, and the tabs 225 are connected to electrode terminals 214 to form a current loop.

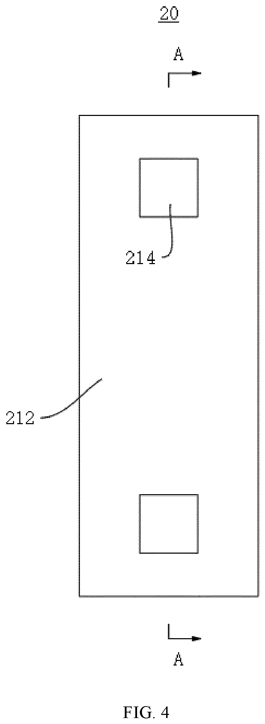

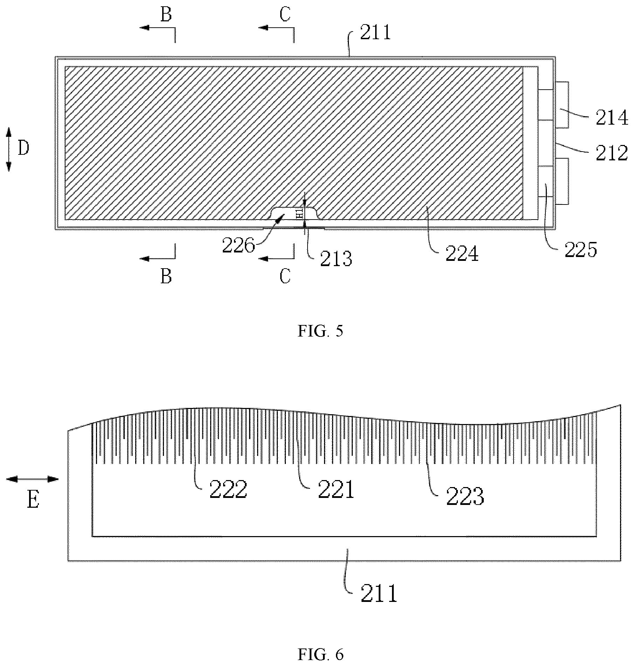

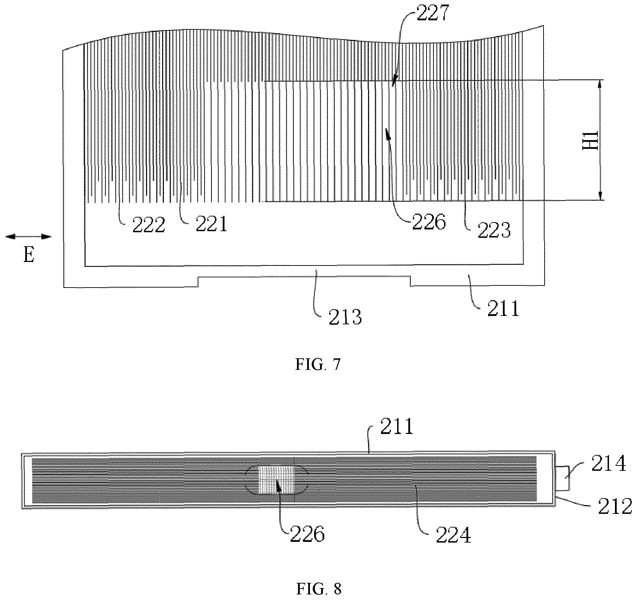

Referring to FIG. 3, 4, 5, 6, 7, and 8, FIG. 4 is a schematic top view of a battery cell 20 according to some embodiments of this application. FIG. 5 is a cross-sectional view along A-A in FIG. 4. FIG. 6 is a cross-sectional view along B-B in FIG. 5. FIG. 7 is a cross-sectional view along C-C in FIG. 5 (the first notches 226 are located inside the projection of the pressure relief mechanism 213 on the electrode assembly 22). FIG. 8 is a bottom schematic view of FIG. 5 (the first notches 226 are located inside the projection of the pressure relief mechanism 213 on the electrode assembly 22); To facilitate the display of the electrode assembly 22, one wall of the housing 21 is hidden in FIG. 8. An embodiment of this application provides a battery cell 20, where the battery cell 20 includes an electrode assembly 22 and a housing 21. The electrode assembly 22 includes a first electrode plate, a second electrode plate, and a separator 223, where the first electrode plate and the second electrode plate have opposite polarities, the first electrode plate includes a plurality of first electrode plate portions 221, the second electrode plate includes a plurality of second electrode plate portions 222, along a first direction, the first electrode plate portions 221 and the second electrode plate portions 222 are stacked, and the separator 223 is configured to insulate and separate the first electrode plate portion 221 from the second electrode plate portion 222. The housing 21 is configured to accommodate the electrode assembly 22, the housing 21 having a pressure relief mechanism 213. At least one of the first electrode plate portions 221 is provided with a first notch 226 facing the pressure relief mechanism 213 at a position corresponding to the pressure relief mechanism 213, and along the first direction, the separator 223 covers the first notch 226.

One of the first electrode plate and the second electrode plate is a positive electrode plate, and the other is a negative electrode plate. For example, when the first electrode plate is a positive electrode plate, the second electrode plate is a negative electrode plate; and when the first electrode plate is a negative electrode plate, the second electrode plate is a positive electrode plate. The separator 223 is provided between the first electrode plate and the second electrode plate to insulate and separate the first electrode plate from the second electrode plate, preventing the first electrode plate and the second electrode plate from contacting and causing a short circuit.

For a wound electrode assembly 22, both the first electrode plate and the second electrode plate include a bent region and a flat region, with the bent region connected to the flat region. The first electrode plate portion 221 is a portion of the first electrode plate located in the flat region, and the second electrode plate portion 222 is a portion of the second electrode plate located in the flat region.

For a stacked electrode assembly 22, the electrode assembly 22 includes a plurality of first electrode plates and a plurality of second electrode plates. A single first electrode plate can constitute the first electrode plate portion 221, and a single second electrode plate can constitute the second electrode plate portion 222.

The first electrode plate portion 221 and the second electrode plate portion 222 are stacked in the first direction, where the first direction may be direction E as shown in FIG. 6.

The housing 21 includes a housing body 211 and an end cover 212. The pressure relief mechanism 213 may be provided on the housing body 211 or may be provided on the end cover 212. This is not limited in this application.

The first notch 226 is a notch structure on the first electrode plate portion 221. A position of the first notch 226 may correspond to a position of the pressure relief mechanism 213 and face towards the pressure relief mechanism 213, so that the first notch 226 can avoid the pressure relief mechanism 213, thereby reducing the risk of the electrode assembly 22 blocking the pressure relief mechanism 213, and allowing the pressure relief mechanism 213 to relieve pressure normally.

In this application, the first notch 226 may be provided on one first electrode plate portion 221, the first notch 226 may be provided on two first electrode plate portions 221, or the first notch 226 may be provided on more than two first electrode plate portions 221.

The separator 223 remains unchanged in this application. The separator 223 originally separates the first electrode plate from the second electrode plate. After the first notch 226 is provided on the first electrode plate portion 221, the separator 223 covers the first notch 226 along the first direction.

The electrode assembly 22 includes the first electrode plate, the second electrode plate, and the separator 223. The first electrode plate, the second electrode plate, and the separator 223 can be wound or stacked to form the electrode assembly 22. The first electrode plate includes the plurality of first electrode plate portions 221, and the second electrode plate includes the plurality of second electrode plate portions 222. The plurality of first electrode plate portions 221 and the plurality of second electrode plate portions 222 are stacked in the first direction. The separator 223 is provided between the first electrode plate portion 221 and the second electrode plate portion 222 to insulate and separate the first electrode plate portion 221 from the second electrode plate portion 222, preventing the first electrode plate portion 221 and the second electrode plate portion 222 from contacting and causing a short circuit. The first notch 226 is provided on the first electrode plate portion 221 of the battery cell 20. The first notch 226 corresponds to the position of the pressure relief mechanism 213 and faces the pressure relief mechanism 213, allowing the first notch 226 to avoid the pressure relief mechanism 213, and reducing the risk of the first electrode plate portion 221 blocking the pressure relief mechanism 213. This allows the pressure relief mechanism 213 to open normally during pressure relief of the battery cell 20, enhancing the safety of the battery cell 20. It should be noted that since the separator 223 is relatively soft and therefore is not prone to block the pressure relief mechanism 213, there is no need to provide an avoidance structure on the separator 223, simplifying production. Additionally, with the first notch 226 provided on the first electrode plate portion 221, the energy density of the battery cell 20 can be relatively high.

Referring to FIG. 3, 4, 5, 6, 7, and 8, in some embodiments, a plurality of first electrode plate portions 221 each are provided with the first notch 226, and in a plane perpendicular to a second direction, a projection of the pressure relief mechanism 213 overlaps with projections of the plurality of first notches 226 at least partially; where the second direction is perpendicular to the first direction, and the first notches 226 face the pressure relief mechanism 213 along the second direction.

"A plurality of first electrode plate portions 221 each are provided with the first notch 226" includes that two first electrode plate portions 221 each are provided with the first notch 226, three first electrode plate portions 221 each are provided with the first notch 226, and more than three first electrode plate portion 221 each are provided with the first notch 226.

The second direction is a direction in which the first notch 226 faces the pressure relief mechanism 213, and the second direction is perpendicular to the first direction. Referring to FIG. 5, the second direction may be direction D as shown in the figure.

It should be noted that an annular dashed line in FIG. 8 shows a range of a projection of the pressure relief mechanism 213 on the electrode assembly 22.

"In a plane perpendicular to a second direction, a projection of the pressure relief mechanism 213 overlaps with projections of the plurality of first notches 226 at least partially" is intended to indicate that among the plurality of first notches 226, at least part of the first notches 226 overlap with the projection of the pressure relief mechanism 213 along the second direction on the electrode assembly 22. Among the plurality of first notches 226, some first notches 226 may be located outside the projection of the pressure relief mechanism 213 along the second direction on the electrode assembly 22. The first notches 226 may extend beyond the projection of the pressure relief mechanism 213 along the second direction on the electrode assembly 22, meaning that part of the first notches 226 may be located within the projection of the pressure relief mechanism 213 along the second direction on the electrode assembly 22 and another part of the first notches 226 may be located outside the projection of the pressure relief mechanism 213 along the second direction on the electrode assembly 22.

With the first notches 226 provided on the plurality of first electrode plate portions 221, the plurality of first electrode plate portions 221 can avoid the pressure relief mechanism 213, reducing the risk of the electrode assembly 22 blocking the pressure relief mechanism 213 and enhancing the safety of the battery cell 20.

Referring to FIGs. 3, 4, 5, 6, 7, and 8, in some embodiments, in a plane perpendicular to the second direction, the projections of the plurality of first notches 226 are all located within the projection of the pressure relief mechanism 213.

"The projections of the plurality of first notches 226 are all located within the projection of the pressure relief mechanism 213" means that all the first notches 226 are located within the projection of the pressure relief mechanism 213 along the second direction on the electrode assembly 22.

Among the plurality of first notches 226, the first notches 226 located within the projection of the pressure relief mechanism 213 on the electrode assembly 22 can avoid the pressure relief mechanism 213. However, among the plurality of first notches 226, the first notches 226 located outside the projection of the pressure relief mechanism 213 on the electrode assembly 22 cannot avoid the pressure relief mechanism 213. Therefore, all the first notches 226 are located within the projection of the pressure relief mechanism 213 on the electrode assembly 22, so that the first electrode plate portions 221 provided with the first notches 226 all avoid the pressure relief mechanism 213, reducing the risk of the electrode assembly 22 blocking the pressure relief mechanism 213, and improving the safety of the battery cell 20. At the same time, since the positions where the first notches 226 are provided cannot undergo electrochemical reactions, all the first notches 226 are provided as within the projection of the pressure relief mechanism 213 on the electrode assembly 22, while the first electrode plate portions 221 outside the projection of the pressure relief mechanism 213 on the electrode assembly 22 are not provided with the first notches 226, which is conducive to improving the avoidance effect on the pressure relief mechanism 213 while ensuring a higher energy density of the battery cell 20.

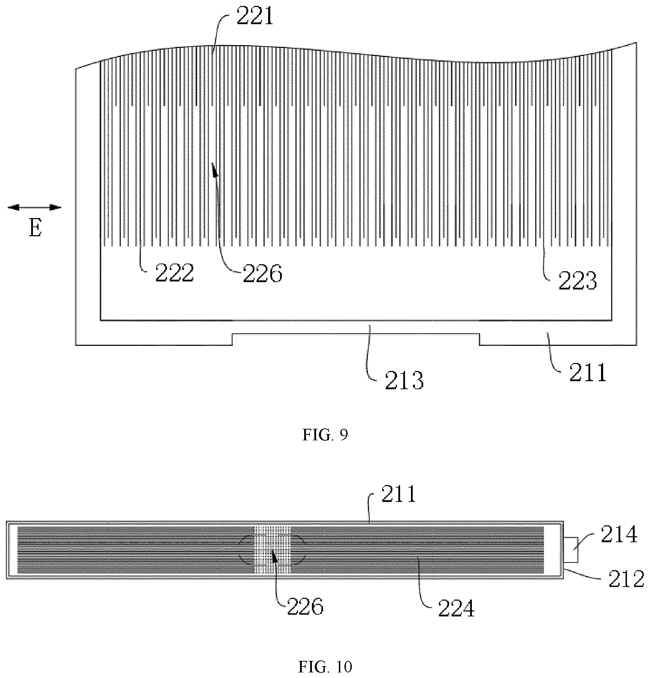

Referring to FIGs. 9 and 10, FIG. 9 is a cross-sectional view along C-C in FIG. 5 (part of the first notches 226 are located outside the projection of the pressure relief mechanism 213 on the electrode assembly 22). FIG. 10 is a bottom schematic view of FIG. 5 (part of the first notches 226 are located outside the projection of the pressure relief mechanism 213 on the electrode assembly 22). To facilitate the display of the electrode assembly 22, one wall of the housing 21 is hidden in FIG. 10. Similarly, the annular dashed line in FIG. 10 shows a range of the projection of the pressure relief mechanism 213 on the electrode assembly 22.

In some embodiments, among the plurality of first notches 226, part of the first notches 226 overlap with the projection of the pressure relief mechanism 213 along the second direction on the electrode assembly 22. Among the plurality of first notches 226, another part of the first notches 226 are located outside the projection of the pressure relief mechanism 213 along the second direction on the electrode assembly 22.

In some embodiments, each first electrode plate portion 221 is provided with the first notch 226. This makes production and manufacturing more convenient.

Referring to FIGs. 3, 4, 5, 6, 7, and 8, in some embodiments, the plurality of first notches 226 are arranged side by side along the first direction.

The positions, shapes, and sizes of the plurality of first notches 226 are exactly the same, so that the edges of the plurality of first notches 226 are completely aligned. In this way, the projections of the plurality of first notches 226 on a plane perpendicular to the first direction can completely overlap.

The plurality of first notches 226 being arranged side by side along the first direction is more conducive to avoiding the pressure relief mechanism 213 (when the plurality of first notches 226 are not arranged side by side along the first direction, part of the first electrode plate portions 221 may block the pressure relief mechanism 213, resulting in a reduced avoidance effect).

In some embodiments, in a plane perpendicular to the first direction, a projection area of the first notch 226 is S1, and a projection area of the first electrode plate portion 221 is S2, satisfying: S1/(S1+S2)≤0.1.

Referring to FIG. 5, the projection area S2 of the first electrode plate portion 221 may be regarded as the area of the hatched portion in the figure. The projection area S1 of the first notch 226 may be regarded as the area of the blank portion indicating the position of the first notch 226 in the figure.

In some embodiments, S1/(S1+S2)=0.1, 0.09, 0.08, 0.07, 0.06, 0.05, 0.04, 0.03, 0.02, 0.01, and the like.

Since the positions where the first notches 226 are provided cannot undergo electrochemical reactions, limiting S1/(S1+S2)≤0.1 ensures that the first notch 226 is not too large, thereby ensuring that the energy density of the battery cell 20 is not excessively compromised due to the provision of the first notch 226.

In some embodiments, S1/(S1+S2)≤0.03 is further satisfied.

In some embodiments, S1/(S1+S2)=0.03, 0.025, 0.02, 0.015, 0.01, 0.005, and the like.

Limiting S1/(S1+S2)≤0.03 ensures that the first notch 226 is not too large, achieving the avoidance of the pressure relief mechanism 213 while ensuring a high energy density of the battery cell 20.

Referring to FIGs. 3, 4, 5, 6, 7, and 8, in some embodiments, at least one of the second electrode plate portions 222 is provided with a second notch 227 facing the pressure relief mechanism 213 at a position corresponding to the pressure relief mechanism 213, and along the first direction, the separator 223 covers the second notch 227.

The second notch 227 is a notch structure on the second electrode plate portion 222. A position of the second notch 227 can correspond to the position of the pressure relief mechanism 213 and face towards the pressure relief mechanism 213, so that the second notch 227 can avoid the pressure relief mechanism 213, thereby reducing the risk of the electrode assembly 22 blocking the pressure relief mechanism 213, and allowing the pressure relief mechanism 213 to relieve pressure normally.

In this application, the second notch 227 may be provided on one second electrode plate portion 222, the second notch 227 may be provided on two second electrode plate portions 222, or the second notch 227 may be provided on more than two second electrode plate portions 222.

The separator 223 remains unchanged in this application. The separator 223 originally separates the first electrode plate from the second electrode plate. After the second notch 227 is provided on the second electrode plate portion 222, the separator 223 covers the second notch 227 along the first direction.

The first notch 226 is provided on the first electrode plate portion 221 of the battery cell 20. The first notch 226 corresponds to the position of the pressure relief mechanism 213 and faces the pressure relief mechanism 213. The second notch 227 is provided on the second electrode plate portion 222. The second notch 227 corresponds to the position of the pressure relief mechanism 213 and faces the pressure relief mechanism 213. The first notch 226 and the second notch 227 are both configured to avoid the pressure relief mechanism 213, reducing the risk of the first electrode plate portion 221 and the second electrode plate portion 222 blocking the pressure relief mechanism 213. This allows the pressure relief mechanism 213 to open normally during pressure relief of the battery cell 20, enhancing the safety of the battery cell 20.

In some embodiments, a plurality of second electrode plate portions 222 each are provided with the second notch 227, and in a plane perpendicular to the second direction, the projection of the pressure relief mechanism 213 overlaps with projections of the plurality of second notches 227 at least partially; where the second direction is perpendicular to the first direction, and the first notches 226 face the pressure relief mechanism 213 along the second direction.

"A plurality of second electrode plate portions 222 each are provided with the second notch 227" includes that two second electrode plate portions 222 each are provided with the second notch 227, three second electrode plate portions 222 each are provided with the second notch 227, and more than three second electrode plate portion 222 each are provided with the second notch 227.

"In a plane perpendicular to a second direction, a projection of the pressure relief mechanism 213 overlaps with projections of the plurality of second notches 227 at least partially" is intended to indicate that among the plurality of second notches 227, at least part of the second notches 227 overlap with the projection of the pressure relief mechanism 213 along the second direction on the electrode assembly 22. Among the plurality of second notches 227, some second notches 227 may be located outside the projection of the pressure relief mechanism 213 along the second direction on the electrode assembly 22. The second notches 227 may extend beyond the projection of the pressure relief mechanism 213 along the second direction on the electrode assembly 22, meaning that part of the second notches 227 may be located within the projection of the pressure relief mechanism 213 along the second direction on the electrode assembly 22 and another part of the second notches 227 may be located outside the projection of the pressure relief mechanism 213 along the second direction on the electrode assembly 22.

With the second notches 227 provided on the plurality of second electrode plate portions 222, the plurality of second electrode plate portions 222 can avoid the pressure relief mechanism 213, reducing the risk of the electrode assembly 22 blocking the pressure relief mechanism 213 and enhancing the safety of the battery cell 20.

Referring to FIGs. 3, 4, 5, 6, 7, and 8, in some embodiments, in a plane perpendicular to the second direction, the projections of the plurality of second notches 227 are all located within the projection of the pressure relief mechanism 213.

"The projections of the plurality of second notches 227 are all located within the projection of the pressure relief mechanism 213" means that all the second notches 227 are located within the projection of the pressure relief mechanism 213 along the second direction on the electrode assembly 22.

Among the plurality of second notches 227, the second notches 227 located within the projection of the pressure relief mechanism 213 on the electrode assembly 22 can effectively avoid the pressure relief mechanism 213. However, among the plurality of second notches 227, the second notches 227 located outside the projection of the pressure relief mechanism 213 on the electrode assembly 22 cannot avoid the pressure relief mechanism 213. Therefore, all the second notches 227 are located within the projection of the pressure relief mechanism 213 on the electrode assembly 22, so that the second electrode plate portions 222 provided with the second notches 227 all avoid the pressure relief mechanism 213, reducing the risk of the electrode assembly 22 blocking the pressure relief mechanism 213, and improving the safety of the battery cell 20. In addition, since the positions where the second notches 227 are provided cannot undergo electrochemical reactions, all the second notches 227 are provided as within the projection of the pressure relief mechanism 213 on the electrode assembly 22, while the second electrode plate portions 222 outside the projection of the pressure relief mechanism 213 on the electrode assembly 22 are not provided with the second notches 227, which is conducive to improving the avoidance effect on the pressure relief mechanism 213 while ensuring a higher energy density of the battery cell 20.

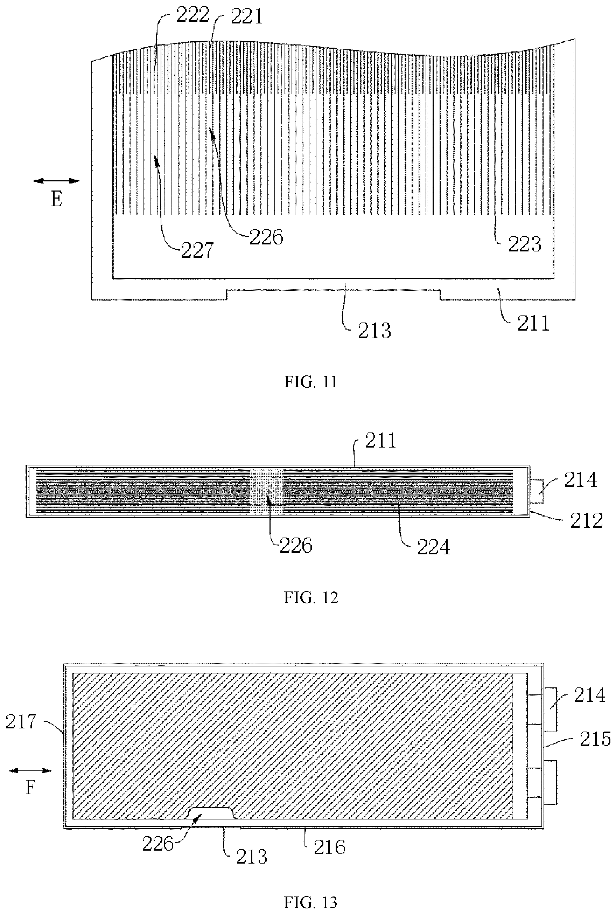

Referring to FIGs. 11 and 12, FIG. 11 is a cross-sectional view along C-C in FIG. 5 (part of the first notches 226 and second notches 227 are located outside the projection of the pressure relief mechanism 213 on the electrode assembly 22). FIG. 12 is a bottom schematic view of FIG. 5 (part of the first notches 226 and second notches 227 are located outside the projection of the pressure relief mechanism 213 on the electrode assembly 22). To facilitate the display of the electrode assembly 22, one wall of the housing 21 is hidden in FIG. 12. Similarly, the annular dashed line in FIG. 12 shows a range of the projection of the pressure relief mechanism 213 on the electrode assembly 22.

In some embodiments, among the plurality of second notches 227, part of the second notches 227 overlap with the projection of the pressure relief mechanism 213 along the second direction on the electrode assembly 22. Among the plurality of second notches 227, another part of the second notches 227 are located outside the projection of the pressure relief mechanism 213 along the second direction on the electrode assembly 22.

In some embodiments, each second electrode plate portion 222 is provided with the second notch 227. This makes production and manufacturing more convenient.

In some embodiments, the plurality of second notches 227 are arranged side by side along the first direction.

The positions, shapes, and sizes of the plurality of second notches 227 and first notches 226 are exactly the same, so that the edges of the plurality of second notches 227 and first notches 226 are completely aligned. In this way, the projections of the plurality of second notches 227 on a plane perpendicular to the first direction can completely overlap with the projections of the first notches 226 on the plane.

The plurality of second notches 227 being arranged side by side along the first direction is more conducive to avoiding the pressure relief mechanism 213 (when the plurality of second notches 227 are not arranged side by side along the first direction, a first electrode plate portion 221 or a second electrode plate portion 222 may block the pressure relief mechanism 213, resulting in a reduced avoidance effect).

In some embodiments, in a plane perpendicular to the second direction, a total area of overlapping parts between the projections of the plurality of first notches 226 and the projection of the pressure relief mechanism 213 is S3, a total area of overlapping parts between the projections of the plurality of second notches 227 and the projection of the pressure relief mechanism 213 is S4, and the projection area of the pressure relief mechanism 213 is S5, satisfying: (S3+S4)/S5≥0.3.

The total area of overlapping parts between the projections of the plurality of first notches 226 and the projection of the pressure relief mechanism 213 is an actual area by which the plurality of first electrode plate portions 221 can avoid the pressure relief mechanism 213.

The total area of overlapping parts between the projections of the plurality of second notches 227 and the projection of the pressure relief mechanism 213 is an actual area by which the plurality of second electrode plate portions 222 can avoid the pressure relief mechanism 213.

S3+S4 represents a sum of an actual area by which the plurality of first electrode plate portions 221 can avoid the pressure relief mechanism 213 and an actual area by which the plurality of second electrode plate portions 222 can avoid the pressure relief mechanism 213.

(S3+S4)/S5 represents the proportion of the sum of the actual area by which the plurality of first electrode plate portions 221 can avoid the pressure relief mechanism 213 and the actual area by which the plurality of second electrode plate portions 222 can avoid the pressure relief mechanism 213 to the projection area of the pressure relief mechanism 213.

The value of the proportion of the sum of the actual area by which the plurality of first electrode plate portions 221 can avoid the pressure relief mechanism 213 and the actual area by which the plurality of second electrode plate portions 222 can avoid the pressure relief mechanism 213 to the projection area of the pressure relief mechanism 213 may be: (S3+S4)/S5=0.3, 0.4, 0.5, 0.6, 0.7, 0.8, 0.9, 1 and the like.

With (S3+S4)/S5≥0.3, a sum of a total area of part of the projections of the plurality of first notches 226 on the pressure relief mechanism 213 that are within the pressure relief mechanism 213 and a total area of part of the projections of the plurality of second notches 227 on the pressure relief mechanism 213 that are within the pressure relief mechanism 213 accounts for more than 30% of the projection area of the pressure relief mechanism 213, achieving a good avoidance effect of the pressure relief mechanism 213.

In some embodiments, in a plane perpendicular to the first direction, a projection area of the second notch 227 is S6, and a projection area of the second electrode plate portion 222 is S7, satisfying: S6/(S6+S7)≤0.1.

Referring to FIG. 5, the projection area S2 of the second electrode plate portion 222 may be regarded as the area of the hatched portion in the figure.

In some embodiments, S6/(S6+S7)=0.1, 0.09, 0.08, 0.07, 0.06, 0.05, 0.04, 0.03, 0.02, 0.01, and the like.

Since the positions where the second notches 227 are provided cannot undergo electrochemical reactions, limiting S6/(S6+S7)≤0.1 ensures that the second notch 227 is not too large, thereby ensuring that the energy density of the battery cell 20 is not excessively compromised due to the provision of the second notch 227.

In some embodiments, S6/(S6+S7)≤0.03 is further satisfied.

In some embodiments, S6/(S6+S7)=0.03, 0.025, 0.02, 0.015, 0.01, 0.005, and the like.

Limiting S6/(S6+S7)≤0.03 ensures that the second notch 227 is not too large, achieving the avoidance of the pressure relief mechanism 213 while ensuring a higher energy density of the battery cell 20.

Referring to FIGs. 3, 4, 5, 6, 7, and 8, in some embodiments, along the second direction, a depth dimension of the first notch 226 is H1, a depth dimension of the second notch 227 is H2, the second direction is perpendicular to the first direction, and the first notch 226 and the second notch 227 both face the pressure relief mechanism 213 along the second direction; where at least one of H1 and H2 has a dimension not less than 2mm.

The depth of the first notch 226 refers to a maximum distance between an open end of the first notch 226 and a surface opposite the open end along the second direction. The depth of the first notch 226 may be: H1=2mm, 2.5mm, 3mm, 3.5mm, 4mm, 4.5mm, and the like.

The depth of the second notch 227 refers to a maximum distance between an open end of the second notch 227 and a surface opposite the open end along the second direction. The depth of the second notch 227 may be: H2=2mm, 2.5mm, 3mm, 3.5mm, 4mm, 4.5mm, and the like.

The depth of the first notch 226 is greater than or equal to 2mm, so that the first notch 226 has sufficient depth to avoid the pressure relief mechanism 213. The depth of the second notch 227 is greater than or equal to 2mm, so that the second notch 227 has sufficient depth to avoid the pressure relief mechanism 213.

In some embodiments, that at least one of H1 and H2 has a dimension not less than 3mm is further satisfied.

The value of the depth of the first notch 226 may be: H1=3mm, 3.5mm, 4mm, 4.5mm, 5mm, 5.5mm, 6mm, 6.5mm, and the like.

The value of the depth of the second notch 227 may be: H2=3mm, 3.5mm, 4mm, 4.5mm, 5mm, 5.5mm, 6mm, 6.5mm, and the like.

The depth of the first notch 226 is greater than or equal to 3mm, so that the effect of the first notch 226 avoiding the pressure relief mechanism 213 is better. The depth of the second notch 227 is greater than or equal to 3mm, so that the effect of the second notch 227 avoiding the pressure relief mechanism 213 is better.

Referring to FIG. 13, FIG. 13 is a cross-sectional view along A-A in FIG. 4 (a distance between the pressure relief mechanism 213 and the first wall 215 is greater than a distance between the pressure relief mechanism 213 and the third wall 217). In some embodiments, the housing 21 has a first wall 215, a second wall 216, and a third wall 217, along a third direction, the first wall 215 is opposite the third wall 217, the second wall 216 connects the first wall 215 and the third wall 217, the first wall 215 and/or the third wall 217 is provided with an electrode terminal 214, the electrode terminal 214 is electrically connected to the electrode assembly 22, and the third direction is perpendicular to the first direction; and the pressure relief mechanism 213 is provided on the second wall 216.

The third direction is perpendicular to the first direction. Referring to FIG. 13, the third direction may be direction F shown in the figure.

The first wall 215, the second wall 216, and the third wall 217 are three walls of the housing 21. The first wall 215, the second wall 216, and the third wall 217 can all belong to the housing body 211, or one of them may belong to the end cover 212. In other words, the end cover 212 may be used alone as one of the first wall 215, the second wall 216, and the third wall 217.

In this application, the first wall 215 and the third wall 217 are arranged opposite each other along the third direction, and the second wall 216 connects the first wall 215 and the third wall 217.

The electrode terminals 214 may be both arranged on the first wall 215, or be both arranged on the third wall 217, or be arranged on the first wall 215 and the third wall 217 respectively. The pressure relief mechanism 213 is provided on the second wall 216.

The electrode terminals 214 and the pressure relief mechanism 213 being provided on different walls reduces the influence of the pressure relief mechanism 213 on the electrode terminals 214, improving the safety of the battery cell 20.

Referring to FIG. 13, in some embodiments, the electrode terminal 214 is provided on the first wall 215, and along the third direction, a distance between the pressure relief mechanism 213 and the first wall 215 is greater than a distance between the pressure relief mechanism 213 and the third wall 217.

Compared with the first wall 215 provided with the electrode terminals 214, the third wall 217 is closer to the position of the pressure relief mechanism 213 on the second wall 216.

Along the third direction, the distance between the pressure relief mechanism 213 and the first wall 215 is greater than the distance between the pressure relief mechanism 213 and the third wall 217, that is, the pressure relief mechanism 213 is provided in a region of the second wall 216 farther from the electrode terminals 214, to further reduce the influence of the pressure relief mechanism 213 on the electrode terminal 214, improving the safety of the battery cell 20.

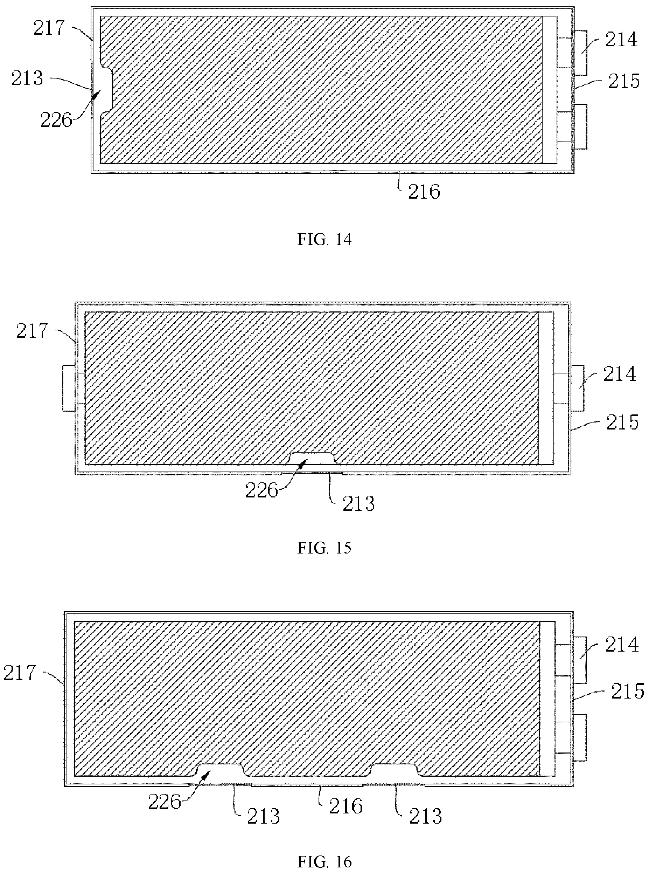

Referring to FIG. 14, FIG. 14 is a cross-sectional view along A-A in FIG. 4 (the electrode terminal 214 is provided on the first wall 215, and the pressure relief mechanism 213 is provided on the third wall 217). In some other embodiments, the battery cell 20 includes two electrode terminals 214, both electrode terminals 214 are provided on the first wall 215. The pressure relief mechanism 213 is provided on the third wall 217. In this way, the pressure relief mechanism 213 is far from the electrode terminals 214, reducing the influence of the pressure relief mechanism 213 on the electrode terminals 214 and improving the safety of the battery cell 20.

Referring to FIG. 15, FIG. 15 is a cross-sectional view along A-A in FIG. 4 (the electrode terminals 214 are provided on the first wall 215 and the third wall 217). In still some other embodiments, the battery cell 20 includes two electrode terminals 214, and the two electrode terminals 214 are respectively provided on the first wall 215 and the third wall 217. The pressure relief mechanism 213 is provided in the middle of the second wall 216, so that along the third direction, the distance between the pressure relief mechanism 213 and the first wall 215 is equal to the distance between the pressure relief mechanism 213 and the third wall 217. In this way, the pressure relief mechanism 213 is relatively far from both electrode terminals 214, reducing the influence of the pressure relief mechanism 213 on the electrode terminals 214 and improving the safety of the battery cell 20.

Referring to FIG. 16, FIG. 16 is a cross-sectional view along A-A in FIG. 4 (including multiple pressure relief mechanisms 213). In some embodiments, the housing 21 is provided with a plurality of pressure relief mechanisms 213, one of the first electrode plate portions 221 is provided with a plurality of first notches 226, and the first notches 226 are in one-to-one correspondence with the pressure relief mechanisms 213.

As shown in FIG. 16, the housing 21 is provided with two pressure relief mechanisms 213, so that one first electrode plate portion 221 is also provided with two first notches 226, and one first notch 226 corresponds to the position of one pressure relief mechanism 213.

The provision of the plurality of pressure relief mechanisms 213 facilitates pressure relief of the battery cell 20 from multiple positions simultaneously, accelerating the pressure relief speed, and thereby improving the safety of the battery cell 20. In this case, one first electrode plate portion 221 is provided with a plurality of first notches 226 to avoid the plurality of pressure relief mechanisms 213, reducing the risk of the first electrode plate portion 221 blocking a pressure relief mechanism 213. This allows each pressure relief mechanism 213 to open normally during pressure relief of the battery cell 20, improving the safety of the battery cell 20.

In some embodiments, the first electrode plate is a positive electrode plate.

Providing the first notch 226 only on the positive electrode plate will not cause lithium precipitation. If the first electrode plate is a negative electrode plate, lithium precipitation will occur, reducing the performance of the battery cell 20.

In some embodiments, the electrode assembly 22 is a stacked electrode assembly 22.

A stacked electrode assembly 22 is formed by stacking the first electrode plate, the separator 223, and the second electrode plate along the first direction.

During manufacturing, the first electrode plate can be provided with the first notch 226 first, and then winding or stacking is performed to form the electrode assembly 22. Compared with a wound electrode assembly 22, a stacked electrode assembly 22 is easier to ensure that the position of the first notch 226 corresponds to the pressure relief mechanism 213.

An embodiment of this application further provides a battery 100, where the battery 100 includes a box 10 and the above battery cell 20, where the battery cell 20 is accommodated in the box 10.

An embodiment of this application further provides an electric device, where the electric device includes the above battery cell 20, where the battery cell 20 is configured to supply electrical energy; or the electric device includes the above battery 100, where the battery 100 is configured to supply electrical energy.

According to some embodiments of this application, refer to FIG. 3 to FIG. 8.

An embodiment of this application provides a battery cell 20, where the battery cell 20 includes an electrode assembly 22 and a housing 21. The electrode assembly 22 includes a first electrode plate, a second electrode plate, and a separator 223, where the first electrode plate and the second electrode plate have opposite polarities, the first electrode plate includes a plurality of first electrode plate portions 221, the second electrode plate includes a plurality of second electrode plate portions 222, along a first direction, the first electrode plate portions 221 and the second electrode plate portions 222 are stacked, and the separator 223 is configured to insulate and separate the first electrode plate portion 221 from the second electrode plate portion 222. The housing 21 is configured to accommodate the electrode assembly 22, the housing 21 having a pressure relief mechanism 213. At least one of the first electrode plate portions 221 is provided with a first notch 226 facing the pressure relief mechanism 213 at a position corresponding to the pressure relief mechanism 213, and along the first direction, the separator 223 covers the first notch 226.

The electrode assembly 22 includes the first electrode plate, the second electrode plate, and the separator 223. The first electrode plate, the second electrode plate, and the separator 223 can be wound or stacked to form the electrode assembly 22. The first electrode plate includes the plurality of first electrode plate portions 221, and the second electrode plate includes the plurality of second electrode plate portions 222. The plurality of first electrode plate portions 221 and the plurality of second electrode plate portions 222 are stacked in the first direction. The separator 223 is provided between the first electrode plate portion 221 and the second electrode plate portion 222 to insulate and separate the first electrode plate portion 221 from the second electrode plate portion 222, preventing the first electrode plate portion 221 and the second electrode plate portion 222 from contacting and causing a short circuit. The first notch 226 is provided on the first electrode plate portion 221 of the battery cell 20. The first notch 226 corresponds to the position of the pressure relief mechanism 213 and faces the pressure relief mechanism 213, allowing the first notch 226 to avoid the pressure relief mechanism 213, and reducing the risk of the first electrode plate portion 221 blocking the pressure relief mechanism 213. This allows the pressure relief mechanism 213 to open normally during pressure relief of the battery cell 20, enhancing the safety of the battery cell 20. It should be noted that since the separator 223 is relatively soft and therefore is not prone to block the pressure relief mechanism 213, there is no need to provide an avoidance structure on the separator 223, simplifying production. Additionally, with the first notch 226 provided on the first electrode plate portion 221, the energy density of the battery cell 20 can be relatively high.

At least one of the second electrode plate portions 222 is provided with a second notch 227 facing the pressure relief mechanism 213 at a position corresponding to the pressure relief mechanism 213, and along the first direction, the separator 223 covers the second notch 227. The first notch 226 is provided on the first electrode plate portion 221 of the battery cell 20. The first notch 226 corresponds to the position of the pressure relief mechanism 213 and faces the pressure relief mechanism 213. The second notch 227 is provided on the second electrode plate portion 222. The second notch 227 corresponds to the position of the pressure relief mechanism 213 and faces the pressure relief mechanism 213. The first notch 226 and the second notch 227 are both configured to avoid the pressure relief mechanism 213, reducing the risk of the first electrode plate portion 221 and the second electrode plate portion 222 blocking the pressure relief mechanism 213. This allows the pressure relief mechanism 213 to open normally during pressure relief of the battery cell 20, enhancing the safety of the battery cell 20.

The foregoing descriptions are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery cell, comprising:
an electrode assembly, comprising a first electrode plate, a second electrode plate, and a separator, wherein the first electrode plate and the second electrode plate have opposite polarities, the first electrode plate comprises a plurality of first electrode plate portions, the second electrode plate comprises a plurality of second electrode plate portions, along a first direction, the first electrode plate portions and the second electrode plate portions are stacked, and the separator is configured to insulate and separate the first electrode plate portion from the second electrode plate portion; and
a housing, configured to accommodate the electrode assembly, the housing having a pressure relief mechanism; wherein
at least one of the first electrode plate portions is provided with a first notch facing the pressure relief mechanism at a position corresponding to the pressure relief mechanism, and along the first direction, the separator covers the first notch.

2. The battery cell according to claim 1, wherein a plurality of first electrode plate portions each are provided with the first notch, and in a plane perpendicular to a second direction, a projection of the pressure relief mechanism overlaps with projections of the plurality of first notches at least partially; wherein
the second direction is perpendicular to the first direction, and the first notches face the pressure relief mechanism along the second direction.

3. The battery cell according to claim 2, wherein in a plane perpendicular to the second direction, the projections of the plurality of first notches are all located within the projection of the pressure relief mechanism.

4. The battery cell according to claim 2 or 3, wherein the plurality of first notches are arranged side by side along the first direction.

5. The battery cell according to any one of claims 1 to 4, wherein in a plane perpendicular to the first direction, a projection area of the first notch is S1, and a projection area of the first electrode plate portion is S2, satisfying: S1/(S1+S2)≤0.1.

6. The battery cell according to claim 5, further satisfying: S1/(S1+S2)≤0.03.

7. The battery cell according to any one of claims 1 to 6, wherein at least one of the second electrode plate portions is provided with a second notch facing the pressure relief mechanism at a position corresponding to the pressure relief mechanism, and along the first direction, the separator covers the second notch.

8. The battery cell according to claim 7, wherein a plurality of second electrode plate portions each are provided with the second notch, and in a plane perpendicular to the second direction, the projection of the pressure relief mechanism overlaps with projections of the plurality of second notches at least partially; wherein
the second direction is perpendicular to the first direction, and the first notches face the pressure relief mechanism along the second direction.

9. The battery cell according to claim 8, wherein in a plane perpendicular to the second direction, the projections of the plurality of second notches are all located within the projection of the pressure relief mechanism.

10. The battery cell according to claim 8 or 9, wherein the plurality of second notches are arranged side by side along the first direction.

11. The battery cell according to any one of claims 8 to 10, wherein in a plane perpendicular to the second direction, a total area of overlapping parts between the projections of the plurality of first notches and the projection of the pressure relief mechanism is S3, a total area of overlapping parts between the projections of the plurality of second notches and the projection of the pressure relief mechanism is S4, and the projection area of the pressure relief mechanism is S5, satisfying: (S3+S4)/S5≥0.3.

12. The battery cell according to any one of claims 7 to 11, wherein in a plane perpendicular to the first direction, a projection area of the second notch is S6, and a projection area of the second electrode plate portion is S7, satisfying: S6/(S6+S7)≤0.1.

13. The battery cell according to claim 12, further satisfying: S6/(S6+S7)≤0.03.

14. The battery cell according to any one of claims 7 to 13, wherein along the second direction, a depth dimension of the first notch is H1, a depth of the second notch is H2, the second direction is perpendicular to the first direction, and the first notch and the second notch both face the pressure relief mechanism along the second direction; wherein
at least one of H1 and H2 has a dimension not less than 2mm.

15. The battery cell according to claim 14, wherein at least one of H1 and H2 has a dimension not less than 3mm.

16. The battery cell according to any one of claims 1 to 15, wherein the housing has a first wall, a second wall, and a third wall, along a third direction, the first wall is opposite the third wall, the second wall connects the first wall and the third wall, the first wall and/or the third wall is provided with an electrode terminal, the electrode terminal is electrically connected to the electrode assembly, and the third direction is perpendicular to the first direction; and
the pressure relief mechanism is provided on the second wall.

17. The battery cell according to claim 16, wherein the electrode terminal is provided on the first wall, and along the third direction, a distance between the pressure relief mechanism and the first wall is greater than a distance between the pressure relief mechanism and the third wall.

18. The battery cell according to any one of claims 1 to 17, wherein the housing is provided with a plurality of pressure relief mechanisms, one first electrode plate portion is provided with a plurality of first notches, and the first notches are in one-to-one correspondence with the pressure relief mechanisms.

19. The battery cell according to any one of claims 1 to 18, wherein the first electrode plate is a positive electrode plate.

20. The battery cell according to any one of claims 1 to 19, wherein the electrode assembly is a stacked electrode assembly.

21. A battery, comprising:
a box; and
the battery cell according to any one of claims 1 to 20, wherein the battery cell is accommodated in the box.

22. An electric device, comprising the battery cell according to any one of claims 1 to 20, wherein the battery cell is configured to provide electric energy, or comprising the battery according to claim 21, wherein the battery is configured to provide electric energy.
